# EUROPEAN PATENT APPLICATION

(11) **EP 3 644 124 A1**
(43) Date of publication of application: **29.04.2020**
(21) Application number: 19197747.9
(22) Date of filing: 17.09.2019
(51) Int. Cl.: G03G 15/00

(54) **IMAGE FORMING SYSTEM AND NON-TRANSITORY RECORDING MEDIUM STORING COMPUTER READABLE PROGRAM**

(30) Priority: 24.10.2018 JP 2018199698
(71) Applicant: KONICA MINOLTA, INC., Tokyo 100-7015 (JP)
(72) Inventor: Kitaguchi, Tatsuya, Tokyo, 100-7015 (JP)
(74) Representative: Henkel & Partner mbB

(57) **Abstract**

An image forming system includes a job information obtaining unit, an image forming unit, a plurality of stacking units, and a controlling unit. The job information obtaining unit obtains job information. The image forming unit forms images on sheets based on the job information. The controlling unit obtains, from the job information, next processing information performed after the image forming processing by the image forming unit, and decides, based on the next processing information, the stacking unit in which the sheets are to be stacked, from among the plurality of stacking units for each of the jobs.

## Description

### CROSS-REFERENCE TO RELATED APPLICATIONS

The entire disclosure of Japanese Patent Application No. 2018-199698, filed on Oct. 24, 2018, is incorporated herein by reference in its entirety.

### BACKGROUND

### Technological Field

The present invention relates to an image forming system forming images on sheets and a non-transitory recording medium storing a computer readable program.

### Description of the Related art

An image forming system includes an image forming device forming images on sheets, and a stacking device in which the sheets on which the images are formed by the image forming device are stacked. And, the image forming device forms the images on the sheets based on job information outputted from an image processing device. Further, the image forming system sometimes performs, as post-processing, post-processing by a post-processing device with respect to the sheets stacked in the stacking device.

The image forming system is also described in, for example, Patent Literature 1 (Japanese Unexamined Patent Application Publication No. 2010-202337). Patent Literature 1 describes a technology in which each of a first stacker and a second stacker includes a second conveying path conveying sheets from the previous stage to the subsequent stage, a shift tray, and a third conveying path branched from the second conveying path. And, in coupling both of the first stacker and the second stacker for stack processing the sheets conveyed from an image forming device into the first stacker and the second stacker, when the first stacker is filled with the sheets discharged to the shift tray, a first branching pawl is switched to convey the sheets from the second conveying path to the second stacker. And, in the description, the first branching pawl of the second stacker is switched to the direction conveying the sheets to the shift tray side to discharge the sheets to the shift tray, and in the meantime, a lower door of the first stacker is opened to pull out a cart, thereby taking out the sorted sheet bundle.

### Citation List

### Patent Literature

Patent Literature 1: Japanese Unexamined Patent Application Publication No. 2010-202337

### Summary

However, when a plurality of jobs are executed, sheets formed by the plurality of jobs are mixed and stacked in the stackers of the plurality of stacking devices. As a result, a user is required to pull out and sort the sheets formed by the predetermined job from the stackers in which the sheets formed by the plurality of jobs are mixed and stacked, according to the post-processing device, so that the operation of setting the sheets to the post-processing device is troublesome.

In view of the abovementioned conventional problem, an object of the present invention is to provide an image forming system and a non-transitory recording medium storing a computer readable program, which can reduce the load to a user in an operation of setting sheets on which images are formed, to the next processing.

To solve the abovementioned problem and achieve the object of the present invention, according to an aspect of the present invention, an image forming system reflecting one aspect of the present invention includes a job information obtaining unit, an image forming unit, a plurality of stacking units, and a controlling unit. The job information obtaining unit obtains job information including a plurality of jobs representing processing contents performed with respect to sheets. The image forming unit forms images on the sheets based on the job information. The sheets discharged from the image forming unit are stacked in each of the stacking units in the state of being divided for each of the jobs. The controlling unit obtains, from the job information, next processing information to be performed after the image forming processing by the image forming unit, and decides, based on the next processing information, the stacking unit in which the sheets are to be stacked, from among the plurality of stacking units for each of the jobs.

A non-transitory recording medium storing a computer readable program of the present invention causes a computer to perform:
causing a job information obtaining unit to obtain job information including a plurality of jobs representing processing contents performed with respect to sheets;
causing an image forming unit to form images on the sheets based on the job information;
dividing the sheets discharged from the image forming unit for each of the jobs and stacking the sheets in one of a plurality of stacking units; and
obtaining, from the job information, next processing information to be performed after the image forming processing by the image forming unit and causing a controlling unit to decide, based on the next processing information, the stacking unit in which the sheets are to be stacked, from among the plurality of stacking units for each of the jobs.

### Brief Description of the Drawings

The advantages and features provided by an embodiment of the invention will become more fully understood from the detailed description given hereinbelow and the appended drawings which are given by way of illustration only, and thus are not intended as a definition of the limits of the present invention:
Fig. 1 is a schematic diagram illustrating the overall configuration of an image forming system according to a first embodiment of the present invention;
Fig. 2 is a block diagram illustrating the hardware configuration of the image forming system according to the first embodiment of the present invention;
Fig. 3 is an explanatory view illustrating the operation example of a conventional image forming system;
Fig. 4 is a flowchart illustrating job information reception processing before print start in the image forming system according to the first embodiment of the present invention;
Fig. 5 is a flowchart illustrating job information reception processing during job execution in the image forming system according to the first embodiment of the present invention;
Fig. 6 is a flowchart illustrating stacking unit decision processing in the image forming system according to the first embodiment of the present invention;
Fig. 7 is an explanatory view illustrating the operation example of the image forming system according to the first embodiment of the present invention;
Fig. 8 is an explanatory view illustrating a display example displayed on an operation displaying unit of the image forming system according to the first embodiment of the present invention;
Fig. 9 is a flowchart illustrating stacking unit decision processing in an image forming system according to a second embodiment of the present invention;
Fig. 10 is an explanatory view illustrating the operation example of the image forming system according to the second embodiment of the present invention;
Fig. 11 is an explanatory view illustrating a priority table in the stacking unit decision processing in the image forming system according to the second embodiment of the present invention; and
Fig. 12 is an explanatory view illustrating the operation example of an image forming system according to a modification of the present invention.

### Detailed Description of Embodiments

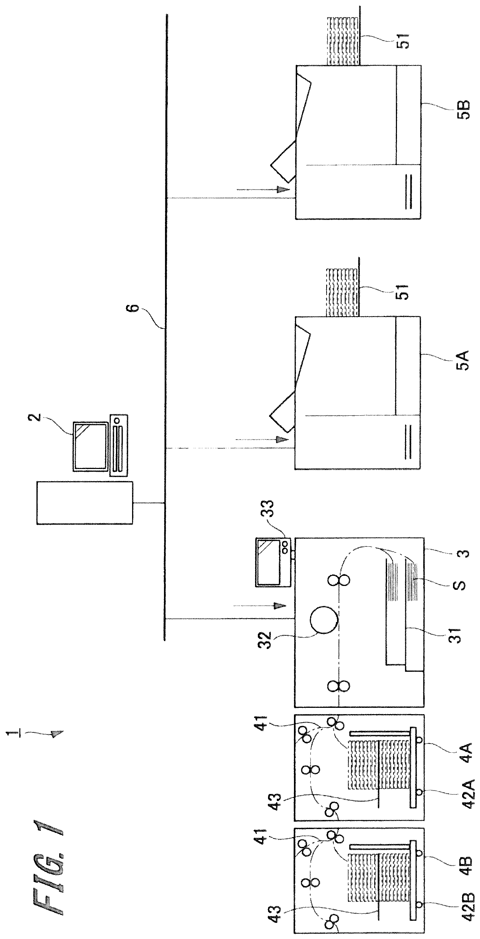

Hereinafter, embodiments of an image forming system and a non-transitory recording medium storing a computer readable program of the present invention will be described with reference to Figs. 1 to 12. It should be noted that the shared members in the respective drawings are indicated by the same reference numerals. Also, the present invention is not limited to the following embodiments.

### 1. First Embodiment

### 1-1. The configuration of an image forming system

First, the overall configuration of an image forming system according to a first embodiment (hereinafter, called "this example") of the present invention will be described. Fig. 1 is a schematic diagram of an image forming system 1 of this example.

As illustrated in Fig. 1, the image forming system 1 includes an information processing device 2 configuring an image forming server, an image forming device 3, a first large capacity stacker 4A and a second large capacity stacker 4B representing sheet stacking devices, and a first case binding machine 5A and a second case binding machine 5B representing an example of post-processing units. The information processing device 2, the image forming device 3, the first large capacity stacker 4A, the second large capacity stacker 4B, the first case binding machine 5A, and the second case binding machine 5B are respectively connected to a network 6, such as a LAN, and are mutually connected via the network 6.

As the information processing device 2, a personal computer is applied. The information processing device 2 generates, based on the input operation of a user, image data that performs image formation by a document creation or image formation application. Also, the information processing device 2 outputs the image data and job information representing processing contents performed with respect to sheets S to the image forming device 3, the first case binding machine 5A, and the second case binding machine 5B via the network 6. It should be noted that the job information is converted to JDF (Job Definition Format), and is outputted to the image forming device 3, the first case binding machine 5A, and the second case binding machine 5B.

The image forming device 3 receives the job information and the image data outputted from the information processing device 2 via the network 6, and forms images on the sheets S based on the image formation setting of the job information and the image data. The image forming device 3 is a device forming the images on the sheets S by, for example, an electrophotography method. The image forming device 3 includes a sheet feeding unit 31 in which the sheets S to be image formed are accommodated, an image forming unit 32 performing the image formation on the sheets S, and an operation displaying unit 33.

The image forming unit 32 includes image forming units having, for example, a plurality of colors (cyan, magenta, yellow, black, and the like), and can form color toner images on the sheets. On the downstream side in the sheet conveying direction (simply called "downstream side") of the image forming unit 32, a fixing unit, not illustrated, to which the sheets on which the toner images are formed are conveyed is disposed. By this fixing unit, the sheets are pressurized and heated, so that the transferred toner images are fixed to the sheets.

On the downstream side in the conveying direction of the sheets S in the image forming device 3, the first large capacity stacker 4A and the second large capacity stacker 4B are disposed. Also, on the downstream side in the conveying direction of the sheets S in the first large capacity stacker 4A, the second large capacity stacker 4B is disposed. That is, the image forming device 3, the first large capacity stacker 4A, and the second large capacity stacker 4B are aligned in series in the conveying direction of the sheets S. To the first large capacity stacker 4A and the second large capacity stacker 4B, the sheets S on which the images are formed by the image forming device 3 are conveyed.

Since the first large capacity stacker 4A and the second large capacity stacker 4B respectively have the same configuration, the first large capacity stacker 4A will be described here.

The first large capacity stacker 4A has a sheet conveying unit 41, a stacker 43 representing an example of a stacking unit in which the sheets S are to be stacked, and a first cart 42A on which the stacker 43 is disposed. In the stacker 43, the sheets S are divided and stacked for each job. The sheet conveying unit 41 conveys the sheets S conveyed from the image forming device 3 toward the stacker 43. The stacker 43 is configured to be capable of being taken out together with the first cart 42A from the housing of the first large capacity stacker 4A. It should be noted that the second large capacity stacker 4B also has a second cart 42B on which the stacker 43 is disposed.

The sheets S stacked in the stacker 43 of the first large capacity stacker 4A are conveyed to the first case binding machine 5A or the second case binding machine 5B by the first cart 42A. Likewise, the sheets S stacked in the stacker 43 of the second large capacity stacker 4B are conveyed to the first case binding machine 5A or the second case binding machine 5B by the second cart 42B.

The first case binding machine 5A and the second case binding machine 5B are disposed at positions physically away from the image forming device 3, the first large capacity stacker 4A, and the second large capacity stacker 4B.

The first case binding machine 5A and the second case binding machine 5B perform post-processing with respect to the sheets S stacked in the sheet feeding tray of a sheet feeding unit 51. The first case binding machine 5A and the second case binding machine 5B perform so-called case binding that binds a plurality of sheets S and wraps the sheets S with a cover to make a book.

It should be noted that in this example, the example in which the first case binding machine 5A and the second case binding machine 5B are applied as post-processing devices, but the present invention is not limited to this. As the post-processing devices, for example, other various post-processing devices, such as a hot foil stamping machine performing hot foil stamping onto the sheet S, a cutting machine cutting the sheets S, and a staple processing machine performing staple processing to the sheets S, are applied.

### 1-2. The hardware configuration of each of the devices

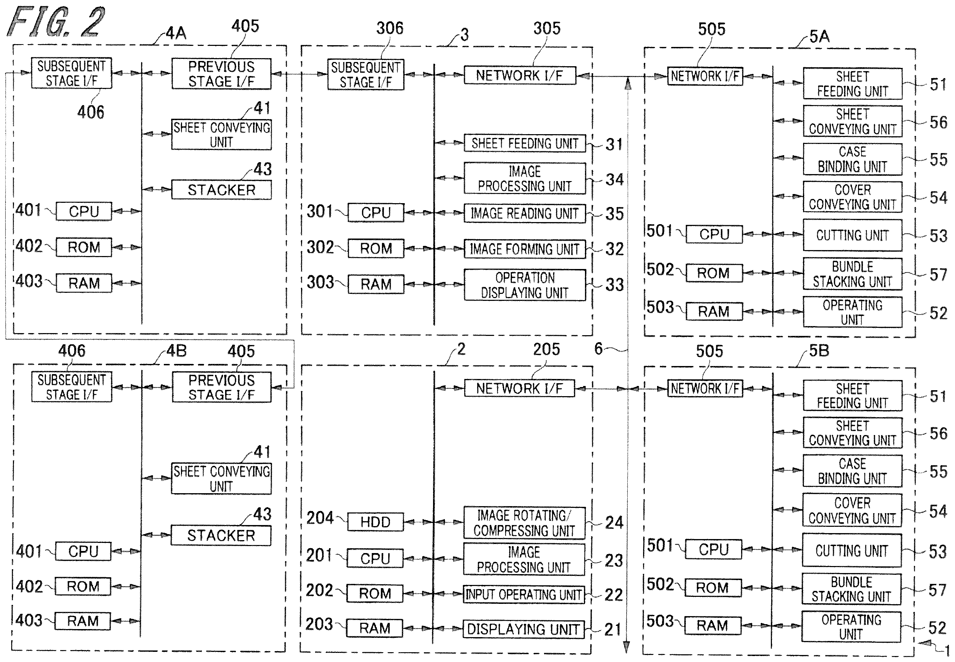

Next, the hardware configuration of each of the devices will be described with reference to Fig. 2.

Fig. 2 is a block diagram illustrating the hardware configuration of each of the devices of the image forming system.

First, the hardware configuration of the information processing device 2 will be described.

As illustrated in Fig. 2, the information processing device 2 includes a displaying unit 21, an input operating unit 22, an image processing unit 23, and an image rotating/compressing unit 24. Also, the information processing device 2 has a CPU (Central Processing Unit) 201, a ROM (Read Only Memory) 202 for storing a program and the like executed by the CPU 201, and a RAM (Random Access Memory) 203 used as the working region of the CPU 201. Further, the information processing device 2 includes a hard disk drive (HDD) 204 as a large capacity storing device, and a network I/F 205. It should be noted that as the ROM 202, a programable ROM that can be typically electrically erased is used. Also, the CPU 201 representing an example of a controlling unit controls the entire information processing device 2.

Also, the displaying unit 21, the input operating unit 22, the image processing unit 23, the image rotating/compressing unit 24, the CPU 201, the ROM 202, the RAM 203, the HDD 204, and the network I/F 205 are respectively mutually communicably connected via a system bus.

The displaying unit 21 is, for example, a display monitor, such as a liquid crystal displaying device (LCD) and an organic ELD (Electro Luminescence Display), and displays the result and the like of the processing performed by the information processing device 2. As the input operating unit 22, for example, a keyboard, a mouse, a touch panel, and the like are used. And, on the input operating unit 22, the user can perform predetermined operation input and instruction. Also, the touch panel applied as the input operating unit 22 and the flat panel display applied as the displaying unit 21 may be stacked to be integrated, thereby configuring an operation display panel.

The image processing unit 23 subjects the image data created by A/D conversion to processing, such as shading correction and dither processing, and stores the image data in the RAM 203. The image rotating/compressing unit 24 performs rotation processing, compression processing, and the like of the image data, and stores the image data in the RAM 203.

As the network I/F 205, for example, an NIC and the like are used, and the network I/F 205 is configured to be capable of transmitting and receiving various data between the respective devices via the network 6.

Next, the hardware configuration of the image forming device 3 will be described. The image forming device 3 includes the sheet feeding unit 31, the image forming unit 32, the operation displaying unit 33, an image processing unit 34, and an image reading unit 35. Also, the image forming device 3 has a CPU 301, a ROM 302 for storing a program and the like executed by the CPU 301, and a RAM 303 used as the working region of the CPU 301. Further, the image forming device 3 has a network I/F 305 and a subsequent stage I/F 306 representing an example of job information obtaining units. The CPU 301 representing an example of a controlling unit controls the entire image forming device 3.

Also, the sheet feeding unit 31, the image forming unit 32, the operation displaying unit 33, the image processing unit 34, the image reading unit 35, the CPU 301, the ROM 302, the RAM 303, the network I/F 305, and the subsequent stage I/F 306 are respectively mutually communicably connected via a system bus.

The image reading unit 35 optically reads a document image to convert the document image to an electric signal. For example, when reading a color document, the image reading unit 35 generates image data having 10-bit luminescence information of each RGB per pixel. The image data generated by the image reading unit 35 and the image data transmitted from the information processing device 2 are transmitted to the image processing unit 34, and are image processed. The image processing unit 34 performs image processing, such as shading correction, image density adjustment, and image compression, with respect to the received image data, as needed. Also, the image forming unit 32 receives the image data image processed by the image processing unit 34, and forms images on the sheets S based on the image data.

The operation displaying unit 33 is a touch panel including a display, such as a liquid crystal displaying device (LCD) and an organic ELD (Electro Luminescence Display). This operation displaying unit 33 is an example of an outputting unit, and displays an instruction menu with respect to the user, information related to the obtained image data, and the like. Further, the operation displaying unit 33 includes a plurality of keys, receives the input of data, such as various instructions, letters, and numbers by the key operation of the user, and outputs the input signal to the CPU 301.

As the network I/F 305, for example, an NIC and the like are used, and the network I/F 305 is configured to be capable of transmitting and receiving various data between the respective devices via the network 6. Also, as the subsequent stage I/F 306, for example, an NIC and the like are used, and the subsequent stage I/F 306 establishes the connection of the first large capacity stacker 4A and the second large capacity stacker 4B connected to the subsequent stage of the image forming device 3, and executes the transmission and reception of data.

Next, the hardware configurations of the first large capacity stacker 4A and the second large capacity stacker 4B will be described. It should be noted that the hardware configurations of the first large capacity stacker 4A and the second large capacity stacker 4B respectively have the same configuration, and here, the first large capacity stacker 4A will be described.

The first large capacity stacker 4A includes the sheet conveying unit 41 and the stacker 43. Also, the first large capacity stacker 4A has a CPU 401 controlling the entire first large capacity stacker 4A, a ROM 402 for storing a program and the like executed by the CPU 401, and a RAM 403 used as the working region of the CPU 401. Further, the first large capacity stacker 4A has a previous stage I/F 405 and a subsequent stage I/F 406.

Also, the sheet conveying unit 41, the stacker 43, the CPU 401, the ROM 402, the RAM 403, the previous stage I/F 405, and the subsequent stage I/F 406 are respectively mutually communicably connected via a system bus.

As the previous stage I/F 405, for example, an NIC and the like are used, and the previous stage I/F 405 establishes the connection with the image forming device 3 connected to the previous stage of the first large capacity stacker 4A, and executes the transmission and reception of data. Also, as the subsequent stage I/F 406, for example, an NIC and the like are used, and the subsequent stage I/F 406 establishes the connection with the second large capacity stacker 4B connected to the subsequent stage of the first large capacity stacker 4A, and executes the transmission and reception of data. It should be noted that when some device is connected to the subsequent stage of the second large capacity stacker 4B, the subsequent stage I/F 406 of the second large capacity stacker 4B establishes the connection to the device, and executes the transmission and reception of data.

Next, the hardware configurations of the first case binding machine 5A and the second case binding machine 5B will be described. It should be noted that the hardware configurations of the first case binding machine 5A and the second case binding machine 5B respectively have the same configuration, and here, the first case binding machine 5A will be described.

The first case binding machine 5A includes the sheet feeding unit 51, an operating unit 52, a cutting unit 53, a cover conveying unit 54, a case binding unit 55, a sheet conveying unit 56, and a bundle stacking unit 57. Also, the first case binding machine 5A has a CPU 501 controlling the entire first case binding machine 5A, a ROM 502 for storing a program and the like executed by the CPU 501, and a RAM 503 used as the working region of the CPU 501. Further, the first case binding machine 5A has a network I/F 505.

The sheet feeding unit 51 has a sheet feeding tray, and the sheets S conveyed from other devices (in this example, the first large capacity stacker 4A and the second large capacity stacker 4B) are stacked in the sheet feeding tray. And, the sheet feeding unit 51 feeds the sheets S stacked in the sheet feeding tray to the sheet conveying unit 56. The sheet conveying unit 56 conveys the sheets S fed from the sheet feeding unit 51 to the respective portions of the first case binding machine 5A, and finally conveys the sheets S to the bundle stacking unit 57.

The operating unit 52 is, for example, a touch panel that can perform input operation according to information displayed on the display panel as a displaying unit. The operating unit 52 receives the input of data, such as various instructions, letters, and numbers by the key operation of the user, and outputs the input signal to the CPU 501.

The cutting unit 53 is, for example, a roller cutter unit including a rotation blade and a fixed blade, and cuts the cover and the sheets S to predetermined lengths. The case binding unit 55 binds a plurality of sheets S to perform staple processing, and sticks the cover to the bundled sheets. With this, the case binding unit 55 performs the case binding processing with respect to the sheets S to make a book. The cover conveying unit 54 conveys the cover used for making the book to the case binding unit 55. The bundle stacking unit 57 stacks the book made by the case binding unit 55 in the stacker.

It should be noted that the information processing device 2, the image forming device 3, the first large capacity stacker 4A, the second large capacity stacker 4B, the first case binding machine 5A, and the second case binding machine 5B may include processing devices, such as MPUs (Micro Processing Units), in place of the CPUs 201, 301, 401, and 501.

### 1-3. Operation example

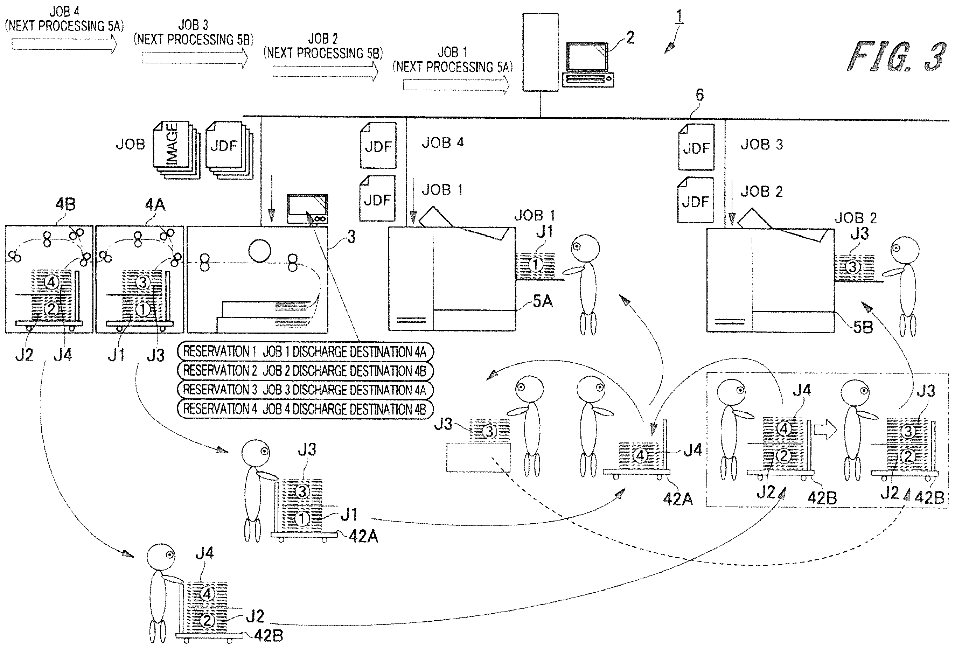

Next, the operation example of the image forming system 1 having the abovementioned configuration will be described with reference to Figs. 3 to 8.

Fig. 3 is an explanatory view illustrating a conventional operation example.

### Conventional example

As illustrated in Fig. 3, in the conventional operation example, when job information (JDF) is inputted from the information processing device 2, the image forming device 3 forms images with respect to the sheets S based on the job information.

A job 1 is set to the first in the execution order, and a job 2 is set to the second in the execution order. Also, a job 3 is set to the third in the execution order, and a job 4 is set to the fourth in the execution order. Thus, first, the information processing device 2 executes the job 1 set to the first in the execution order, and stacks a sheet bundle J1 of the job 1 in the stacker 43 of the first large capacity stacker 4A. Next, the information processing device 2 executes the job 2 set to the second in the execution order. It should be noted that in the conventional operation example, the sheets are discharged to the empty stacker 43 among the plurality of stackers 43 on a priority basis. Thus, since the stacker 43 of the second large capacity stacker 4B is empty, the information processing device 2 stacks a sheet bundle J2 of the job 2 in the stacker 43 of the second large capacity stacker 4B.

Then, the information processing device 2 executes the job 3 set to the third in the execution order, and stacks a sheet bundle J3 of the job 3 in the stacker 43 of the first large capacity stacker 4A. And, the information processing device 2 executes the job 4 set to the fourth in the execution order, and stacks a sheet bundle J4 of the job 4 in the stacker 43 of the second large capacity stacker 4B. Thus, the sheet bundle J3 of the job 3 is stacked above the sheet bundle J1 of the job 1 in the stacker 43 of the first large capacity stacker 4A, and the sheet bundle J4 of the job 4 is stacked above the sheet bundle J2 of the job 2 in the stacker 43 of the second large capacity stacker 4B.

Then, the user conveys the first cart 42A of the first large capacity stacker 4A to the first case binding machine 5A, and conveys the second cart 42B of the second large capacity stacker 4B to the second case binding machine 5B.

As represented by the job information (JDF) inputted to the information processing device 2, the next processing with respect to the sheet bundle J1 of the job 1 is performed by the first case binding machine 5A. However, the next processing with respect to the sheet bundle J3 of the job 3 stacked above the sheet bundle J1 of the job 1 is performed by the second case binding machine 5B. Also, the next processing with respect to the sheet bundle J2 of the job 2 is performed by the second case binding machine 5B, whereas the next processing with respect to the sheet bundle J4 of the job 4 stacked above the sheet bundle J2 of the job 2 is performed by the first case binding machine 5A.

Thus, the user stacks the sheet bundle J3 of the job 3 stacked in the first cart 42A to a different place once. And, the user re-stacks, in the first cart 42A, the sheet bundle J4 of the job 4 stacked in the second cart 42B. Also, the user stacks, in the second cart 42B, the sheet bundle J3 of the job 3 placed on the different place. In this way, in the conventional operation example, the user is required to sort the sheet bundles J1, J2, J3, and J4 of the plurality of jobs according to the post-processing devices, so that the operation of setting the sheet bundles J1, J2, J3, and J4 to the post-processing devices becomes troublesome.

### This example

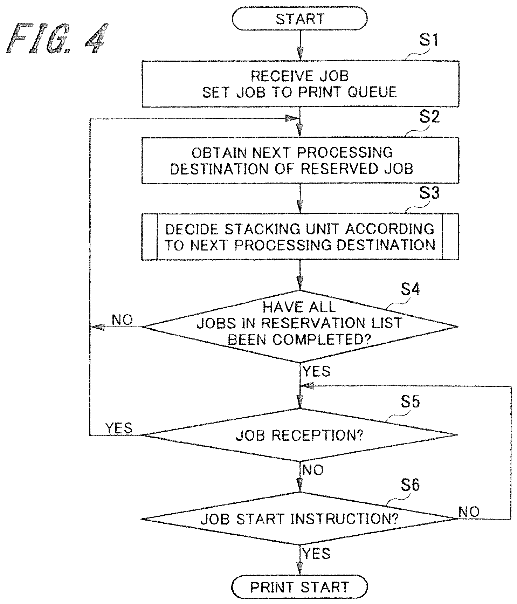

Next, the operation example of this example will be described with reference to Figs. 4 to 8.

First, job information reception processing before print start will be described with reference to Fig. 4. Fig. 4 is a flowchart illustrating the job information reception processing before the print start.

As illustrated in Fig. 4, the network I/F 305 of the image forming device 3 receives job information from the network I/F 205 of the information processing device 2 via the network 6, and sets the received job information to the ROM 302 that is a print queue (step S1). Then, the CPU 301 of the image forming device 3 obtains next processing destination information from the job information set to the print queue (reserved job) (step S2). That is, post-processing information performed after images are formed by the image forming device 3 is obtained.

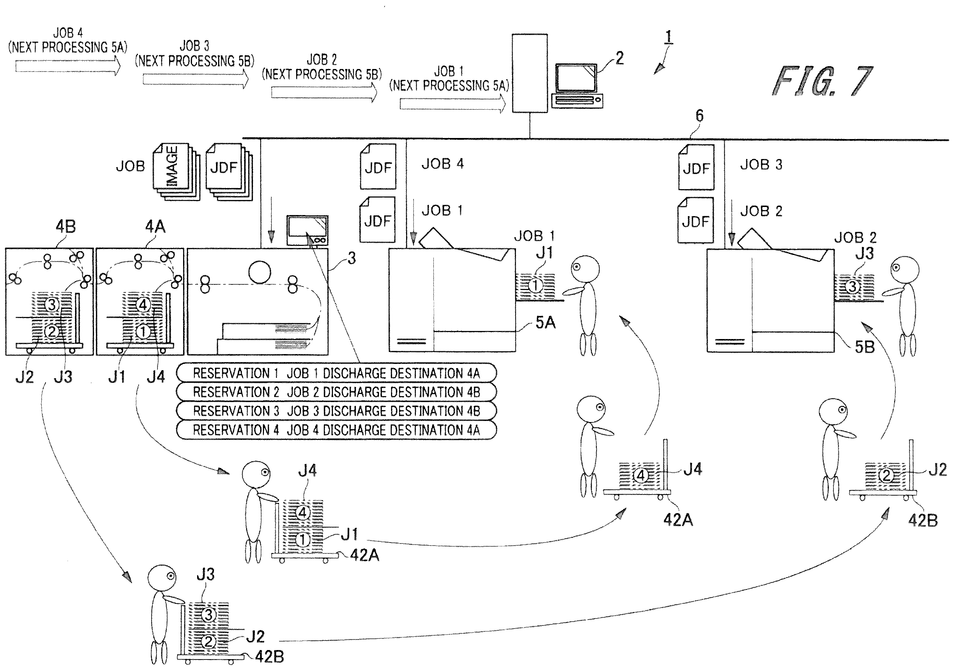

Then, the CPU 301 decides, according to the obtained next processing destination information, the stacking unit in which the sheets S on which the images are formed are to be discharged (step S3). It should be noted that the stacking unit decision processing represented in step S3 will be described later with reference to Fig. 7. Then, the CPU 301 of the image forming device 3 determines whether or not the stacking units for all the jobs in the reservation list have been decided (step S4). That is, the CPU 301 determines whether or not the stacking units for all the jobs set to the print queue have been decided.

When in the processing in step S4, the CPU 301 determines that the job in which the stacking unit has not been decided yet is present (NO determination in step S4), the CPU 301 returns to step S2, and performs the next processing destination obtaining processing and the stacking unit decision processing in step S3. Also, when in the processing in step S4, the CPU 301 determines that the stacking units for all the jobs have been decided (YES determination in step S4), the CPU 301 determines whether or not the job has been newly received (step S5).

When in the processing in step S5, the CPU 301 determines that the job has been newly received (YES determination in step S5), the CPU 301 returns to step S2, and performs the next processing destination obtaining processing and the stacking unit decision processing in step S3. Also, when in the processing in step S5, the CPU 301 determines that the job has not been newly received (NO determination in step S5), the CPU 301 determines whether or not the job start instruction has been inputted (step S6).

When in the processing in step S6, the CPU 301 determines that the job start instruction has not been inputted (NO determination in step S6), the CPU 301 returns to the processing in step S5. Also, when in the processing in step S6, the CPU 301 determines that the job start instruction has been inputted (YES determination in step S6), the CPU 301 starts the image forming processing, that is, executes the print start.

It should be noted that in the processing in step S6, when a predetermined number of jobs are received and when the warm-up operation of the image forming device 3 is completed, the CPU 301 may execute the print start.

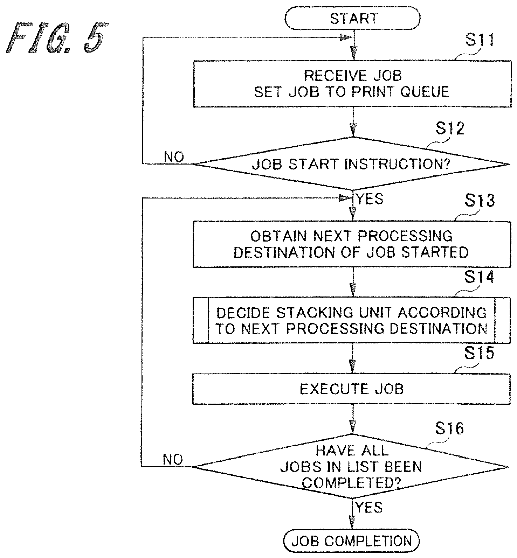

Then, job information reception processing during job execution (during print execution) will be described with reference to Fig. 5.

Fig. 5 is a flowchart illustrating the job information reception processing during the job execution (during the print execution).

As illustrated in Fig. 5, the network I/F 305 of the image forming device 3 receives job information from the network 1/F 205 of the information processing device 2 via the network 6, and sets the received job information to the ROM 302 that is the print queue (step S12). Then, the CPU 301 determines whether or not the start instruction of the received job has been inputted (step S12). When in the processing in step S12, the CPU 301 determines that the job start instruction has not been inputted (NO determination in step S12), the CPU 301 returns to the processing in step S11.

Also, when in the processing in step S12, the CPU 301 determines that the job start instruction has been inputted (YES determination in step S12), the CPU 301 obtains next processing destination information of the job information to be executed (reserved job) (step S13). That is, post-processing information performed after images are formed by the image forming device 3 is obtained.

Then, the CPU 301 decides, according to the obtained next processing destination information, the stacking unit to which the sheets S of the job are to be discharged (step S14). It should be noted that the stacking unit decision processing represented in step S3 will be described later with reference to Fig. 7. And, the CPU 301 executes the image forming processing based on the job information (step S15).

Then, the CPU 301 determines whether or not all the jobs set to the print queue have been completed (step S16). When in the processing in step S16, the CPU 301 determines that all the jobs have not been completed (NO determination in step S16), the CPU 301 returns to the processing in step S13. Also, when in the processing in step S16, the CPU 301 determines that all the jobs have been completed (YES determination in step S16), the jobs in the image forming device 3 are completed.

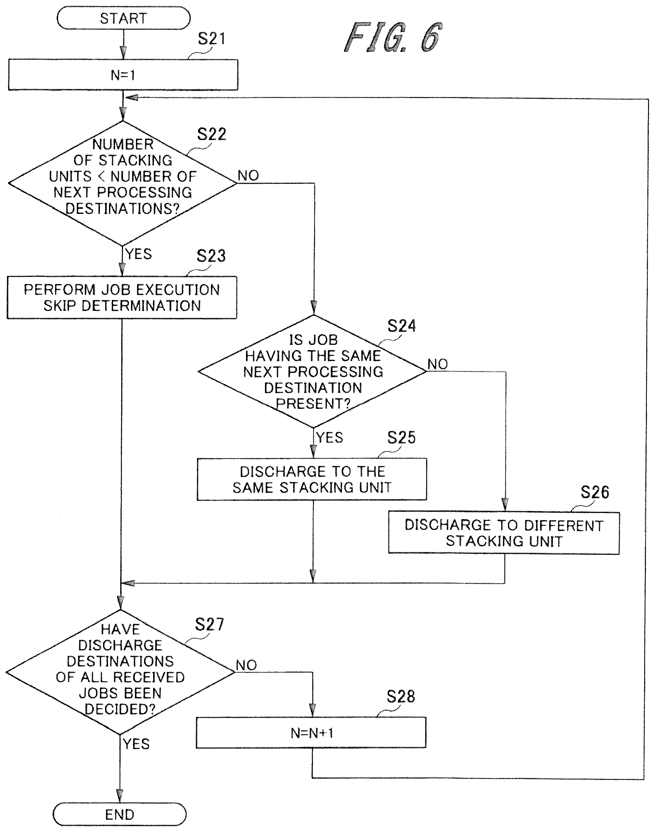

Then, the stacking unit decision processing will be described with reference to Figs. 6 and 7.

Fig. 6 is a flowchart illustrating the stacking unit decision processing. Fig. 7 is an explanatory view illustrating the operation of the image forming system 1 of this example.

As illustrated in Fig. 6, the CPU 301 sets a job N to 1 (N = 1) (step S21). Then, the CPU 301 determines whether or not the number of stacking units in which the sheets are to be stacked (the number of large capacity stackers) is less than the number of next processing destinations (step S22). Here, the number of next processing destinations is set according to the number of post-processing devices performed in all the jobs.

In the example illustrated in Fig. 7, the number of post-processing devices performed in the jobs 1 to 4 inputted to the information processing device 2 is 2 including the first case binding machine 5A and the second case binding machine 5B. And, the number of stacking units is 2 including the first large capacity stacker 4A and the second large capacity stacker 4B.

When in the processing in step S22, the CPU 301 determines that the number of stacking units is less than the number of next processing destinations (YES determination in step S22), the CPU 301 performs the execution skip determination of the job (step S23). Also, when in the processing in step S22, the CPU 301 determines that the number of stacking units is equal to or more than the number of next processing destinations (NO determination in step S22), the CPU 301 determines whether or not the job having the same next processing destination as the job N is present among the jobs in which the stacking units have already been decided (step S24).

When in the processing in step S24, the CPU 301 determines that the job having the same next processing destination is present (YES determination in step S24), the CPU 301 decides the discharge destination of the job N such that the job N is discharged to the stacking unit that is the same as for the job having the same next processing destination (step S25). Also, when in the processing in step S24, the CPU 301 determines that the job having the same next processing destination is absent (NO determination in step S24), the CPU 301 decides the discharge destination of the job N such that the job N is discharged to the stacking unit different from the stacking units of the jobs in which the stacking units have already been decided (step S26).

Then, the CPU 301 determines whether or not the discharge destinations of all the received jobs have been decided (step S27). When in the processing in step S27, the CPU 301 determines that the discharge destinations of all the received jobs have not been decided (NO determination in step S27), the CPU 301 adds 1 to N (N = N + 1) (step S28). And, the CPU 301 returns to the processing in step S22, and performs the stacking unit decision processing of the next job.

Also, when in the processing in step S27, the CPU 301 determines that the discharge destinations of all the received jobs have been decided (YES determination in step S27), the CPU 301 ends the stacking unit decision processing.

It should be noted that as illustrated in Fig. 7, in the case of the job 1, the stacking unit decision processing of other jobs 2, 3, and 4 is not performed, and thus, the CPU 301 determines NO in the processing in step S24. Thus, the discharge destination of the job 1 is decided to one of the first large capacity stacker 4A and the second large capacity stacker 4B.

The next processing destination of the job 2 is the second case binding machine 5B. And, the next processing destination of the job 1 whose discharge destination has been decided is the first case binding machine 5A. That is, since the next processing destination of the job 2 is different from the next processing destination of the job 1, the CPU 301 determines NO in the processing in step S24. Thus, the discharge destination of the job 2 is decided to the stacking unit different from the stacking unit of the job 1 (in the example illustrated in Fig. 7, the second large capacity stacker 4B).

Also, the next processing destination of the job 3 is the second case binding machine 5B that is the same as for the job 2. Since the job 2 having the same next processing destination as the next processing destination of the job 3 is present, the CPU 301 determines YES in the processing in step S24. And, in the processing in step S25, the stacking unit to which the job 3 is to be discharged is decided to the second large capacity stacker 4B that is the same as for the job 2.

Further, the next processing destination of the job 4 is the first case binding machine 5A that is the same as for the job 1. Since the job 1 having the same next processing destination as the next processing destination of the job 4 is present, the CPU 301 determines YES in the processing in step S24. And, in the processing in step S25, the stacking unit destination to which the job 4 is to be discharged is decided to the first large capacity stacker 4A that is the stacking unit that is the same as for the job 1.

In this way, the image forming system 1 of this example decides, based on the information of the next processing destinations, the stacking units to which the respective jobs 1, 2, 3, and 4 are to be discharged. Thus, in the first cart 42A of the first large capacity stacker 4A, the sheet bundle J1 of the job 1 and the sheet bundle J4 of the job 4 post-processed by the first case binding machine 5A are stacked. Also, in the second cart 42B of the second large capacity stacker 4B, the sheet bundle J2 of the job 2 and the sheet bundle J3 of the job 3 post-processed by the second case binding machine 5B are stacked.

With this, the first cart 42A is conveyed to the first case binding machine 5A, and the second cart 42B is conveyed to the second case binding machine 5B. Thus, according to the image forming system 1 of this example, unlike the conventional example, the user can set the sheets to the respective case binding machines 5A and 5B that are the post-processing devices, without performing the operation of sorting the sheet bundles according to the post-processing. As a result, the operation of setting the sheets to the post-processing devices can be easily performed, so that the load to the user can be reduced.

Also, as illustrated in Fig. 6, in the image forming system 1 of this example, after the processing in step S28, the CPU 301 returns to the processing in step S22, and determines the number of stacking units and the number of next processing destinations again. With this, the new job is added during the stacking unit decision processing, so that the possibility that the number of next processing destinations is increased can be considered.

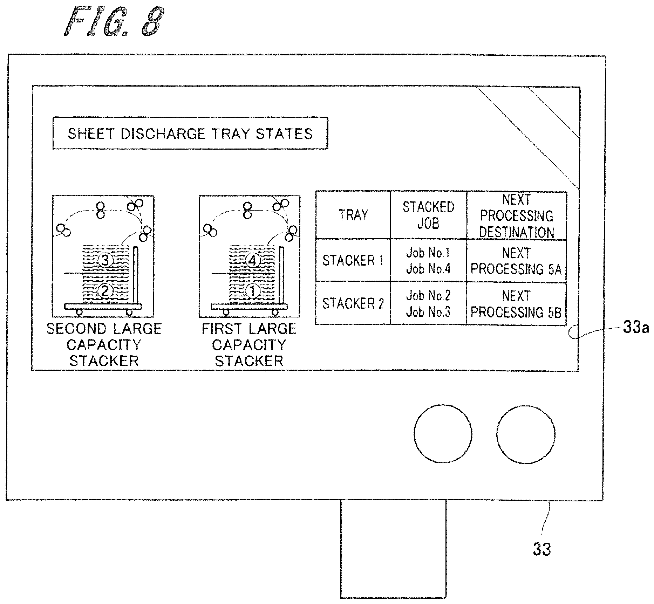

Fig. 8 illustrates an example of a display example displayed on the operation displaying unit 33 after the stacking unit decision processing is completed.

For example, as illustrated in Fig. 8, when the abovementioned stacking unit decision processing is completed, the CPU 301 displays the decided stacking unit information on a display screen 33a of the operation displaying unit 33. On the display screen 33a, the job information for stacking in the respective large capacity stackers 4A and 4B, the information of the next processing destination for each of the large capacity stackers 4A and 4B, and the output order of the jobs are displayed. With this, the stacking unit (the first large capacity stacker 4A or the second large capacity stacker 4B) in which each of the sheet bundle J1 of the job 1, the sheet bundle J2 of the job 2, the sheet bundle J3 of the job 3, and the sheet bundle J4 of the job 4 is to be stacked can be notified to the user. Further, the conveying destination of the cart 42A of the large capacity stacker 4A and the conveying destination of the cart 42B of the large capacity stacker 4B can also be notified to the user.

### 2. Second Embodiment

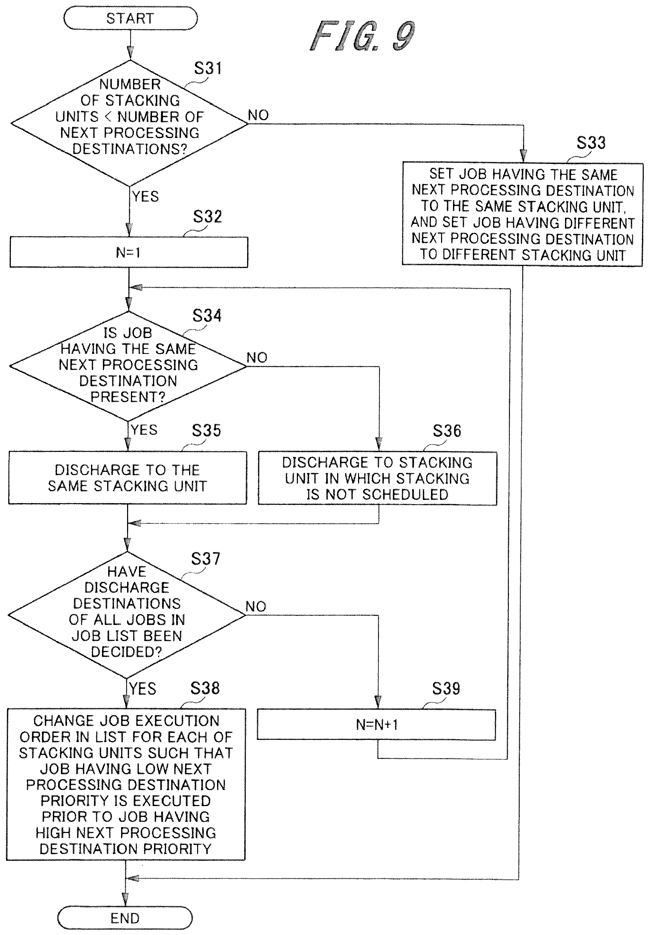

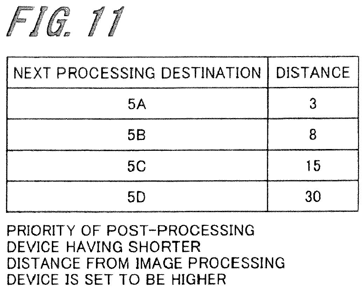

Next, an image forming system according to a second embodiment will be described with reference to Figs. 9 and 11.

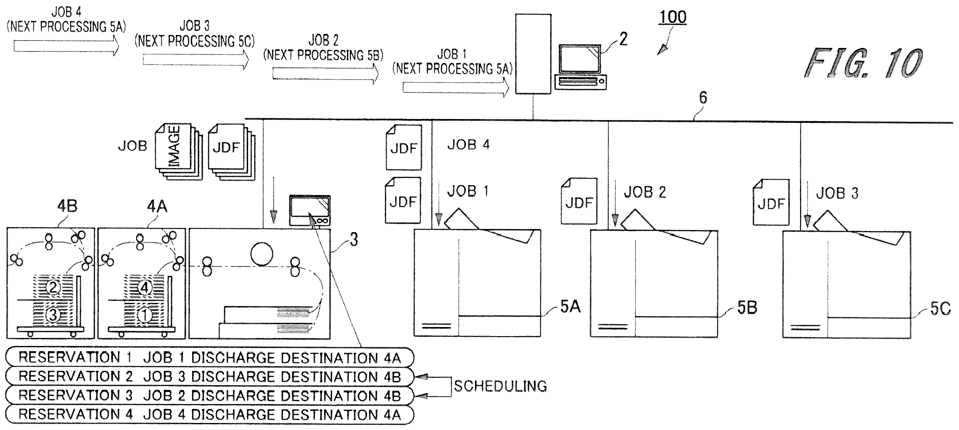

Fig. 9 is a flowchart illustrating stacking unit decision processing according to the second embodiment. Fig. 10 is an explanatory view illustrating the operation of the image forming system according to the second embodiment. Fig. 11 is an explanatory view illustrating a priority table.

An image forming system 100 according to the second embodiment increases the number of post-processing devices to 3 with respect to the image forming system 1 according to the first embodiment. Here, the shared portions with the image forming system 1 according to the first embodiment are indicated by the same reference numerals, and the overlapped description thereof is omitted.

As illustrated in Fig. 10, the image forming system 100 has the information processing device 2, the image forming device 3, the first large capacity stacker 4A, the second large capacity stacker 4B, and three case binding machines 5A, 5B, and 5C representing the post-processing devices. The information processing device 2, the image forming device 3, the first large capacity stacker 4A, the second large capacity stacker 4B, the first case binding machine 5A, the second case binding machine 5B, and the third case binding machine 5C are respectively connected to the network 6, such as a LAN, and are mutually connected via the network 6.

Then, the stacking unit decision processing of the image forming system 100 according to the second embodiment will be described.

As illustrated in Fig. 9, first, the CPU 301 determines whether or not the number of stacking units in which the sheets are to be stacked (the number of large capacity stackers) is less than the number of next processing destinations (step S31). In the image forming system 100 according to the second embodiment, as illustrated in Fig. 10, the number of next processing destinations is 3 including the first case binding machine 5A, the second case binding machine 5B, and the third case binding machine 5C, and the number of stacking units is 2 including the first large capacity stacker 4A and the second large capacity stacker 4B. Thus, in the processing in step S31, the CPU 301 determines that the number of stacking units is less than the number of next processing destinations (YES determination in step S31).

It should be noted that when in the processing in step S31, the CPU 301 determines that the number of stacking units is equal to or more than the number of next processing destinations (NO determination in step S31), the CPU 301 performs the processing in step S33. The processing in step S33 is the same as the processing in steps S24 to S26 illustrated in Fig. 6, and the description thereof is thus omitted.

Also, when in the processing in step S31, the CPU 301 determines that the number of stacking units is less than the number of next processing destinations (YES determination in step S31), the CPU 301 sets the job N to 1 (N = 1) (step S32). The CPU 301 determines whether or not the job having the same next processing destination as the job N is present among the jobs in which the stacking units have already been decided (step S34).

When in the processing in step S34, the CPU 301 determines that the job having the same next processing destination is present (YES determination in step S34), the CPU 301 decides the discharge destination of the job N such that the job N is discharged to the stacking unit that is the same as for the job having the same next processing destination (step S35). Also, when in the processing in step S34, the CPU 301 determines that the job having the same next processing destination is absent (NO determination in step S34), the CPU 301 decides the discharge destination of the job N to the stacking unit in which stacking is not scheduled (step S36).

Then, the CPU 301 determines whether or not the discharge destinations of all the received jobs have been decided (step S37). When in the processing in step S37, the CPU 301 determines that the discharge destinations of all the received jobs have not been decided (NO determination in step S37), the CPU 301 adds 1 to N (N = N + 1) (step S39). And, the CPU 301 returns to the processing in step S34, and performs the stacking unit decision processing of the next job.

Also, when in the processing in step S37, the CPU 301 determines that the discharge destinations of all the received jobs have been decided (YES determination in step S37), the CPU 301 changes the job execution order in the list for each of the stacking units based on the priority table illustrated in Fig. 11 (step S38). In the processing in step S38, the job execution order is changed such that the job having a low priority is executed prior to the job having a high priority based on the priority table illustrated in Fig. 11. Thus, in each of the stacking units, the sheet bundle of the job having a low priority is stacked below the sheet bundle of the job having a high priority, and the sheet bundle of the job having a high priority is stacked above the sheet bundle of the job having a low priority. With this, the stacking unit decision processing is ended.

In the example illustrated in Fig. 10, in the case of the job 1, the stacking unit decision processing of other jobs 2, 3, and 4 is not performed, and thus, the CPU 301 determines NO in the processing in step S34. Thus, the discharge destination of the job 1 is decided to one of the first large capacity stacker 4A and the second large capacity stacker 4B.

The next processing destination of the job 2 is the second case binding machine 5B. And, the next processing destination of the job 1 whose discharge destination has been decided is the first case binding machine 5A. That is, since the next processing destination of the job 2 is different from the next processing destination of the job 1, the CPU 301 determines NO in the processing in step S34. Thus, in the processing in step S36, the discharge destination of the job 2 is decided to the second large capacity stacker 4B in which stacking is not scheduled.

The next processing destination of the job 3 is the third case binding machine 5C. And, the next processing destination of the job 1 whose discharge destination has been decided is the first case binding machine 5A, and the next processing destination of the job 2 is the second case binding machine 5B. That is, the next processing destination of the job 3 is different from the next processing destinations of the job 1 and the job 2. Here, since the next processing destination of the job 4 is the first case binding machine 5A that is the same as for the job 1, the stacking unit destination in which the job 4 is to be discharged is decided to the first large capacity stacker 4A that is the stacking unit that is the same as for the job 1. Thus, in the first large capacity stacker 4A, the stacking of the job 1 and the job 4 is scheduled, and in the processing in step S36, the discharge destination of the job 3 is decided to the second large capacity stacker 4B that is still scheduled to be empty.

As a result, in the first large capacity stacker 4A, the job 1 and the job 4 having the same next processing destination are stacked, and in the second large capacity stacker 4B, the job 2 and the job 3 having different next processing destinations are mixed. However, in the processing in step S38, the execution order in the image forming device 3 for the job 2 and the job 3 is changed based on the next processing destination priority.

In the priority table illustrated in Fig. 11, the priority of the post-processing device physically close to the image forming device 3 and the large capacity stackers 4A and 4B is set to be high. For example, the distance of the first case binding machine 5A from the image forming device 3 is 3, and the distance of the second case binding machine 5B from the image forming device 3 is 8, so that the priority of the first case binding machine 5A is set to be higher than the priority of the second case binding machine 5B. It should be noted that this priority table is stored in, for example, a storing unit, such as the ROM 302 and the RAM 303.

Thus, the input of the job 2 to the information processing device 2 is performed prior to the input of the job 3 to the information processing device 2, so that typically, the job 2 is executed prior to the job 3. However, as illustrated in Fig. 11, the post-processing device to which the job 3 is conveyed (the third case binding machine 5C) is farther than the post-processing device to which the job 2 is conveyed (the second case binding machine 5B). Thus, in the processing in step S38, the execution order is changed such that the job 3 having a low priority is executed prior to the job 2 having a high priority. As a result, in the second large capacity stacker 4B, the sheet bundle J2 of the job 2 is stacked above the sheet bundle J3 of the job 3.

With this, when the sheet bundle J2 is conveyed from the second large capacity stacker 4B to the second case binding machine 5B and the sheet bundle J3 is conveyed from the second large capacity stacker 4B to the third case binding machine 5C, the sheet bundle J2 of the job 2 can be easily set to the second case binding machine 5B disposed at the position closer to the image forming device 3.

It should be noted that in this example, the example in which the priority in which the execution order is changed in the processing in step S38 is set according to the distance from the image forming device 3 has been described, but the present invention is not limited to this. For example, the priority may be set such that the priority of the post-processing device in which the processing time is long may be set to be high, and the priority may be set according to the finishing time of the job. And, the user can set the priority, as needed, according to the installation state, the processing time, and the like of the post-processing device.

Other configurations are the same as the image forming system 1 according to the first embodiment, and the description thereof is thus omitted. The image forming system 100 according to the second embodiment can obtain the same operation and effect as the image forming system 1 according to the first embodiment.

### 3. Modification

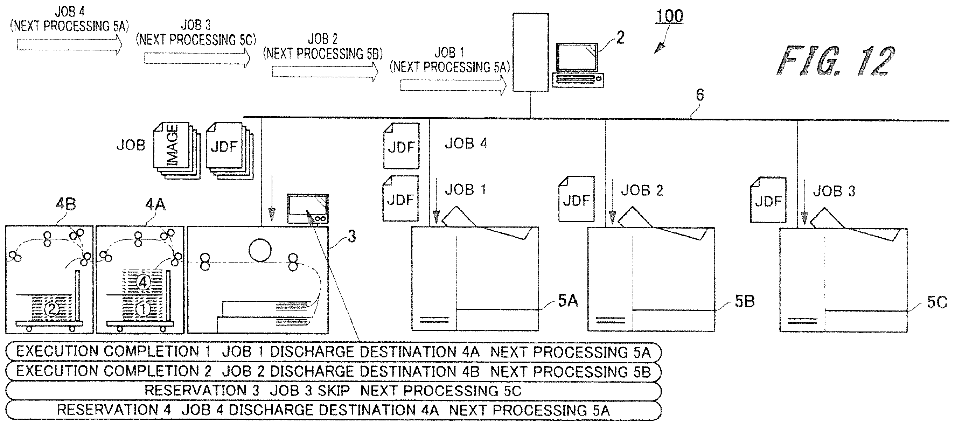

Next, an image forming system according to a modification will be described with reference to Fig. 12.

Fig. 12 is an explanatory view illustrating the operation of the image forming system according to the modification.

In the image forming system according to this modification, like the image forming system 100 according to the second embodiment, two large capacity stackers 4A and 4B and three case binding machines 5A, 5B, and 5C are provided. Thus, here, the shared portions with the image forming system 1 according to the first embodiment and the image forming system 100 according to the second embodiment are indicated by the same reference numerals, and the overlapped description thereof is omitted.

As illustrated in Fig. 12, the state where the sheet bundle of the job 1 has already been stacked in the first large capacity stacker 4A and the sheet bundle of the job 2 has already been stacked in the second large capacity stacker 4B will be described. In this state, the next processing destination of the job 3 that is the next job is the third case binding machine 5C different from the next processing destinations of the job 1 and the job 2. The CPU 301 of the image forming device 3 skips the execution of the job 3.

It should be noted that the next processing destination of the job 4 is the first case binding machine 5A that is the same as for the job 1. Thus, the CPU 301 of the image forming device 3 makes a decision such that the sheets of the job 4 are discharged to the first large capacity stacker 4A. Also, the execution of the job 3 is performed after the completion of the conveying of the jobs 1 and 4 to the first case binding machine 5A and the conveying of the job 2 to the second case binding machine 5B. With this, the sheet bundle of the job having the different next processing destination can be prevented from being mixed in the large capacity stackers 4A and 4B.

Also, the CPU 301 may decide the execution order such that the jobs having the same next processing destinations are continuous. In the example illustrated in Fig. 12, the execution order is changed such that after the job 1, the job 4 having the same processing destination as the job 1 is executed prior to the job 2 and the job 3. With this, the image forming processing of the job 1 and the job 4 is completed, and during the execution of the job 2, the sheet bundles of the job 1 and the job 4 can be conveyed from the first large capacity stacker 4A.

The embodiments of the image forming system have been described above, including the operation and effect thereof. However, the image forming system of the present invention is not limited to the abovementioned embodiments, and various modifications can be made within the scope not departing from the purport of the invention described in the claims.

In the abovementioned embodiments, the color image is formed by using four image forming units, but the image forming device according to the present invention may form a single-color image by using one image forming unit.

Further, the example in which the CPU 301 of the image forming device 3 is applied as the controlling unit deciding the stacking unit in which the sheets are to be discharged, and the stacking unit decision processing is performed by the CPU 301 of the image forming device 3 has been described, but the present invention is not limited to this. For example, the CPU 201 of the information processing device 2 may be applied as the controlling unit, and the stacking unit decision processing may be performed by the CPU 201 of the information processing device 2 based on inputted job information. And, the information of the stacking unit in which the sheets of each job are to be discharged, decided by the information processing device 2 may be outputted to the image forming device 3 together with the image data and the job information. In this case, the network I/F 205 and the input operating unit 22 of the information processing device 2 are the job information obtaining units.

Also, parts or all of the abovementioned respective components, functions, processing units, and the like may be achieved by hardware by, for example, the design of an integrated circuit and the like. Also, the abovementioned respective components, functions, and the like may be achieved by software such that the processor interprets and executes the program achieving each function. The information of the program, table, file, and the like achieving each function can be placed in a memory, a recording device, such as a hard disk and an SSD (Solid State Drive), or a recording medium, such as an IC card, an SD card, and a DVD.

### Reference Signs List

1 ... image forming system, 2 ... information processing device, 3 ... image forming device, 4A, 4B ... large capacity stacker (sheet stacking device), 5A, 5B, 5C ... case binding machine (post-processing device), 32 ... image forming unit, 33 ... operation displaying unit (displaying unit), 42A, 42B ... cart, 43 ... stacker (stacking unit), 44 ... lock mechanism, 201, 301 ... CPU (controlling unit), 305 ... network I/F (job information obtaining unit)

## Claims

1. An image forming system comprising:
a job information obtaining unit obtaining job information including a plurality of jobs representing processing contents performed with respect to sheets;
an image forming unit forming images on the sheets based on the job information;
a plurality of stacking units in which the sheets discharged from the image forming unit are stacked in the state of being divided for each of the jobs; and
a controlling unit obtaining, from the job information, next processing information performed after the image forming processing by the image forming unit, and deciding, based on the next processing information, the stacking unit in which the sheets are to be stacked, from among the plurality of stacking units for each of the jobs.

2. The image forming system according to claim 1,
wherein based on the next processing information, the controlling unit makes a decision such that the sheets of the jobs having the same next processing destination among the plurality of jobs are stacked in the same stacking unit among the plurality of stacking units.

3. The image forming system according to claim 1 or 2,
wherein based on the next processing information, the controlling unit makes a decision such that the sheets of the jobs having different next processing destinations among the plurality of jobs are stacked in the different stacking units among the plurality of stacking units.

4. The image forming system according to claim 1,
wherein the controlling unit has a priority table in which priority is set according to the next processing destination,
wherein when the sheets of the jobs having different next processing destinations are stacked in the same stacking unit, the controlling unit decides the execution order in the image forming unit according to the priority stored in the priority table.

5. The image forming system according to claim 1,
wherein when the sheets have already been stacked in the respective ones of the plurality of stacking units, the controlling unit skips, based on the next processing information, the execution in the image forming unit of the job having the next processing destination different from the next processing destinations of the jobs of the already stacked sheets.

6. The image forming system according to claim 5,
wherein when the job having the same next processing destination as the jobs of the already stacked sheets is present among the jobs after the skipped job, the controlling unit executes the image forming processing by the image forming unit with respect to the job having the same next processing destination prior to the skipped job.

7. The image forming system according to claim 1,
wherein when the number of next processing destinations is more than the number of stacking units, the controlling unit decides, based on the next processing information, the execution order such that the jobs having the same next processing destination among the plurality of jobs are continuous in the execution order in the image forming unit.

8. The image forming system according to claim 1,
wherein the image forming system includes a displaying unit displaying information related to the stacking unit in which the sheets are to be stacked, decided by the controlling unit.

9. The image forming system according to claim 1,
wherein the image forming system includes:
an image forming device having the image forming unit;
a sheet stacking device in which the sheets on which the images are formed by the image forming device are stacked; and
an information processing device outputting the job information to the image forming device,
wherein the controlling unit is provided in the image forming device or the information processing device.

10. A non-transitory recording medium storing a computer readable program comprising:
causing a job information obtaining unit to obtain job information including a plurality of jobs representing processing contents performed with respect to sheets;
causing an image forming unit to form images on the sheets based on the job information;
dividing the sheets discharged from the image forming unit for each of the jobs and stacking the sheets in one of a plurality of stacking units; and
obtaining, from the job information, next processing information performed after the image forming processing by the image forming unit and causing a controlling unit to decide, based on the next processing information, the stacking unit in which the sheets are to be stacked, from among the plurality of stacking units for each of the jobs.
